# FASCICULE DE BREVET EUROPEEN

(11) **EP 2 517 913 B1**
(45) Date de publication et mention de la délivrance du brevet: **15.01.2014**
(21) Numéro de dépôt: 12305475.1
(22) Date de dépôt: 26.04.2012
(51) Int. Cl.: B60J 7/06

(54) **Système mécanisé de bâchage pour benne de véhicule, benne à système(s) de bâchage**
Mechanisiertes Planensystem für Kipper, Kipper mit Planensystem
Mechanised tarp system for tipping lorry, tipper with tarp system

(30) Priorité: 28.04.2011 FR 1153650
(43) Date de publication de la demande: 31.10.2012
(73) Titulaire: Gonnet, Guy, 77910 Germigny l'Evèque (FR)
(72) Inventeur: Gonnet, Guy, 77910 Germigny l'Evèque (FR)
(74) Mandataire: Coralis Harle

(56) Documents cités:
- WO-A1-2009/027285
- US-A- 6 142 554
- US-A1- 2008 302 404

## Description

La présente invention concerne un système mécanisé de bâchage pour benne de véhicule ainsi qu'une benne à système(s) mécanisé(s) de bâchage. Elle a des applications dans le domaine de la construction des véhicules utilitaires et notamment ceux qui sont ouverts sur le dessus et qui doivent être refermés par une bâche ou équivalent. Elle s'applique plus particulièrement aux bennes de camions, remorques ou semi-remorques, le terme benne étant pris dans un sens large.

Il est souvent nécessaire pour diverses raisons de recouvrir un chargement contenu dans une benne et pour cela on utilise généralement une bâche. La manipulation de la bâche pour mise en place, bâchage, ou retrait, débâchage, est une opération fastidieuse, voir dangereuse. Il a donc été proposé, pour faciliter cette opération, de la mécaniser notamment par mise en oeuvre de moyens de motorisation. C'est ainsi que l'on connaît déjà des systèmes mécanisés de bâchage comme ceux décrits dans les documents DE202004018433, CN1458012, US6474718, US6142554, US3656802 ou, encore, US2008/302404, W02009/027285.

Ces systèmes présentent cependant divers inconvénients et le but de l'invention est notamment d'en permettre la résolution.

C'est ainsi que la présente invention concerne un système mécanisé de bâchage pour benne de véhicule, la benne comportant au moins deux parois latérales allongées fixes ou ouvrantes à type de ridelles et deux extrémités opposées de petit coté, la bâche étant amenée à recouvrir ou découvrir la benne à partir d'une des extrémités de ladite benne, dite extrémité de réception, grâce à un moyen d'entraînement.

Selon l'invention, en position découverte extrême, la bâche est positionnée au delà de l'extrémité de réception pour libérer complètement le dessus et/ou les cotés de ladite benne, le moyen d'entraînement de la bâche comportant un arceau de prise de bâche et d'éventuels arceaux secondaires, une partie basculante et deux chariots situés en opposition de chaque côté latéral,
- l'arceau de prise de bâche et les arceaux secondaires s'étendant entre les deux parois latérales et la bâche y étant fixée, l'arceau de prise de bâche pouvant coulisser le long des parois latérales,
- les arceaux coulissant le long des parois latérales entrainés par l'arceau de prise de bâche,
- la partie basculante étant disposée à ladite extrémité de réception et comportant deux bras articulés pouvant se déplacer chacun dans le plan de la paroi latérale correspondante entre une position remontée et une position abaissée sensiblement dans l'axe du bord supérieur de la paroi latérale correspondante,
- les chariots comportant des moyens de déplacement le long des deux parois latérales, les chariots étant entraînés par un premier moyen de motorisation,
   et l'arceau de prise de bâche comporte au niveau de chacun des chariots un premier moyen de crochetage complémentaire d'un second moyen de crochetage du chariot, le premier et le second moyens de crochetage pouvant venir en prise l'un avec l'autre lorsque les bras sur lesquels est disposé l'arceau sont en position abaissée, le chariot ayant été ramené vers l'extrémité de réception, afin de rendre solidaire le chariot et l'arceau de prise de bâche et de permettre des déplacements de l'arceau de prise de bâche et des arceaux secondaires lors de l'entraînement des chariots, et pouvant se désolidariser lorsque les chariots sont ramenés vers l'extrémité de réception et que les deux bras sont remontés ou que l'un ou l'autre des côtés latéraux est ouvert.

L'invention présente la particularité de permettre l'ouverture de l'une ou l'autre des parois latérales allongées ouvrantes à type ridelle sans manipulation manuelle de la bâche ainsi que de la partie supérieure de la benne.

Dans divers modes de mise en oeuvre de l'invention, les moyens suivants pouvant être utilisés seuls ou selon toutes les combinaisons techniquement possibles, sont employés :
- dans certains cas particuliers les arceaux resteront à l'extrémité de réception sans découvrir complètement la benne, et aussi permettre l'ouverture de l'une ou l'autre des deux parois latérales sans intervention manuelle,
- l'arceau de prise de bâche entraine les arceaux secondaires lors de l'entraînement du chariot,
- le bord supérieur de la paroi latérale comporte un décrochement coté extrémité de réception pour recevoir le bras correspondant lorsque ce dernier est abaissé,
- les moyens de déplacement sont des moyens de roulement,
- les moyens de déplacement sont des moyens de coulissement,
- l'arceau de prise de bâche et les arceaux secondaires comportent à leurs deux extrémités des moyens de retenue coulissants permettant le maintien avec coulissement desdits arceaux au moins sur les bras notamment lorsque lesdits bras sont en position verticale,
- les bras comportent chacun une butée mécanique bloquant la course vers l'extrémité de réception de l'arceau de prise de bâche et des arceaux secondaires,
- les moyens de crochetage permettent un certain jeu lors de leur prise réciproque ou de leur crabotage,
- le système comporte deux chariots disposés en opposition sur les deux parois latérales de la benne,
- les bras de la partie basculante ont une position remontée verticale,
- les bras de la partie basculante ont une position remontée au delà de la verticale,
- l'arceau de prise de bâche et les arceaux secondaires comportent à leurs deux extrémités des moyens de retenue avec coulissement permettant le maintien coulissant desdits arceaux sur les deux parois latérales,
- l'arceau de prise de bâche et les arceaux secondaires comportent à leurs deux extrémités des moyens de retenue avec coulissement permettant le maintien coulissant desdits arceaux sur en outre au moins une des parois latérales et, de préférence, les deux parois latérales,
- les moyens de retenue avec coulissement sont constitués d'éléments complémentaires à type de profil de guidage à gorge de réception des galets ou tampons coulissants disposés complémentairement sur l'arceau de prise de bâche et les bras et les parois latérales,
- les moyens de retenue avec coulissement sont constitués d'éléments complémentaires à type de barre de guidage et gorge de réception de ladite barre disposées complémentairement sur l'arceau de prise de bâche et les arceaux secondaires et les bras et la/les parois latérales,
- la partie basculante est entraînée par un second moyen de motorisation,
- les moyens de motorisation sont choisis parmi les moteurs électriques, hydrauliques ou pneumatiques,
- le chariot est entraîné par le premier moyen de motorisation par l'intermédiaire d'une transmission à vis sans fin ou crémaillère ou courroie ou chaîne ou câble,
- la transmission comporte un moyen de réglage de tension, notamment dans le cas d'une courroie ou chaîne ou câble,
- les moyens de roulement du chariot sont des galets roulant ou des tampons coulissants sur le bord supérieur des parois latérales correspondantes,
- le système comporte des détecteurs de fin de course pour la/les moyens de motorisation, un desdits moyens de détection de fin de course permettant l'arrêt du chariot vers l'extrémité de réception lors du débâchage lorsque l'arceau de prise de bâche est arrivé sur le bras correspondant et sans que le chariot n'interfère avec ledit bras,
- les détecteurs de fin de course sont choisis parmi les détecteurs électromécaniques, électromagnétiques, électroniques, hydrauliques, pneumatiques, notamment contacts, ILS, magnétiques, effet Hall, hydrauliques, pneumatiques, surcharge moteur, compte tour moteur...
- le système permet l'ouverture par des moyens hydrauliques de l'une ou l'autre des parois latérales ouvrantes de la benne, sans intervention manuelle sur la bâche, lorsque l'arceau de prise de bâche est arrivé sur les bras correspondants ou que la bâche est arrivée en extrémité de réception, et que les chariots ne plus solidaires de l'arceau de prise de bâche.

L'invention concerne également une benne comportant un ou deux systèmes mécanisés de bâchage tels que présentés et dans le cas de deux systèmes un système étant disposé à chaque extrémité de petit coté.

La présente invention, sans qu'elle en soit pour autant limitée, va maintenant être exemplifiée avec la description qui suit de modes de réalisation et de mise en oeuvre en relation avec :
la Figure 1 qui représente une vue latérale d'une benne avec le système de l'invention,
la Figure 2 qui représente une vue en perspective d'une partie de l'extrémité de réception de la benne pour visualisation de la partie basculante du système,
la Figure 3 qui représente une vue de dessus partielle de la benne,
la Figure 4 qui représente un agrandissement du cartouche E de la Figure 3,
la Figure 5 qui représente une vue en perspective d'une portion de la paroi latérale de la benne au niveau du raccordement du bras de la partie basculante sur ladite paroi latérale,
la Figure 6 qui représente une vue partielle en coupe vers l'extrémité de réception à partir de l'intérieur de la benne,
la Figure 7 qui représente un agrandissement du cartouche H de la Figure 6,
la Figure 8 qui représente un agrandissement du cartouche K de la Figure 7,
la Figure 9 qui représente un agrandissement du cartouche J de la Figure 7,
la Figure 10, et
les Figures 11 à 15 qui représentent diverses vues d'une variante de réalisation de l'invention.

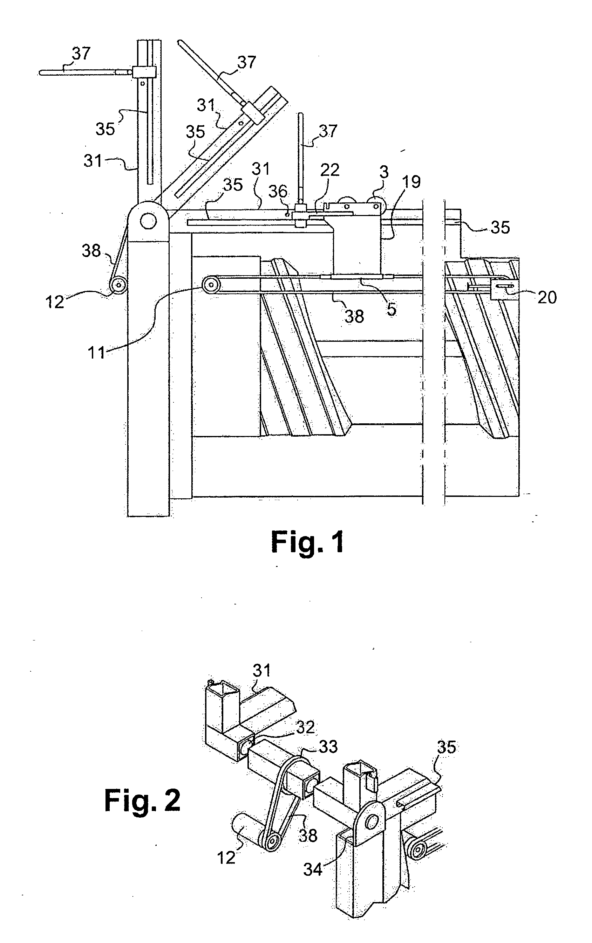

Sur la Figure 1, la benne 42 est vue latéralement. Cette benne comporte ici des parois latérales et de petits cotés essentiellement pleines avec, sur la partie gauche de la Figure 1, sa première extrémité de petit coté, dite de réception, là où la bâche est stockée lorsque la benne est débâchée, c'est-à-dire lorsque la benne est ouverte sur le dessus. On n'a pas représenté la bâche pour simplifier les Figures.

Vers le haut de l'extrémité de réception on trouve la partie basculante 30 dont on a représenté trois positions des deux bras 31. Le bras 31 est représenté dans une position remontée, verticale, une position abaissée, sensiblement horizontale et dans l'axe du bord supérieur de la paroi latérale et une position intermédiaire inclinée sensiblement à 45° à titre d'exemple. Les mouvements de basculement des bras 31 de la partie basculante sont obtenus par l'action d'un moyen de motorisation 12 et d'une transmission à chaîne 38 agissant sur un plateau à dents 33 d'un axe transversal horizontal solidaire à ses deux extrémités aux deux bras comme on peut mieux le voir sur la Figure 2. Les bras, dans la configuration représentée, portent un arceau de prise de bâche 37 et des arceaux secondaires 56 sur lesquels est fixée la bâche qui doit servir à recouvrir la benne. L'arceau de prise de bâche 37 et les arceaux secondaires 56 peuvent coulisser sur une partie de la longueur des bras 31 en étant maintenu grâce à des moyens de retenue coulissants constitués d'un profil de guidage 35 pourvu d'une gorge de réception pour le coulissement de galets ou de tampons 72. On verra qu'un tel profil de guidage 35 est aussi mis en oeuvre le long de la paroi latérale pour maintenir avec coulissement l'arceau de prise de bâche 37 et des arceaux secondaires 56 lors de leurs déplacements et qu'il peut également servir de moyen de retenue coulissant pour le chariot, notamment pour son système de crochetage 22. On peut noter que le profil de guidage 35 est fixé sur les bras et les parois latérales et que les tampons de coulissement sont sur l'arceau de prise de bâche 37 et les arceaux secondaires 56. Un système de butée 36 sur les bras, coté extrémité de réception, empêche la chute par coulissement vers le bas de l'arceau de prise de bâche 37 et des arceaux secondaires 56 lorsque les bras 31 sont remontés.

De chaque côté latéral, un chariot 19 avec des roulements 3 de type galets montés sur des axes 7 de galets, peut rouler le long du bord supérieur de la paroi latérale correspondante. Le chariot peut se déplacer sous l'action d'un moyen de motorisation 45 et d'une transmission par chaîne 38 qui s'enroule sur des roues 11 dont une d'extrémité (partie droite de la Figure 1) comporte un moyen de réglage 20 de la tension de la chaîne. Le chariot est fixé à la chaîne par un bras 5. De préférence, les moyens de motorisation sont des moteurs hydrauliques.

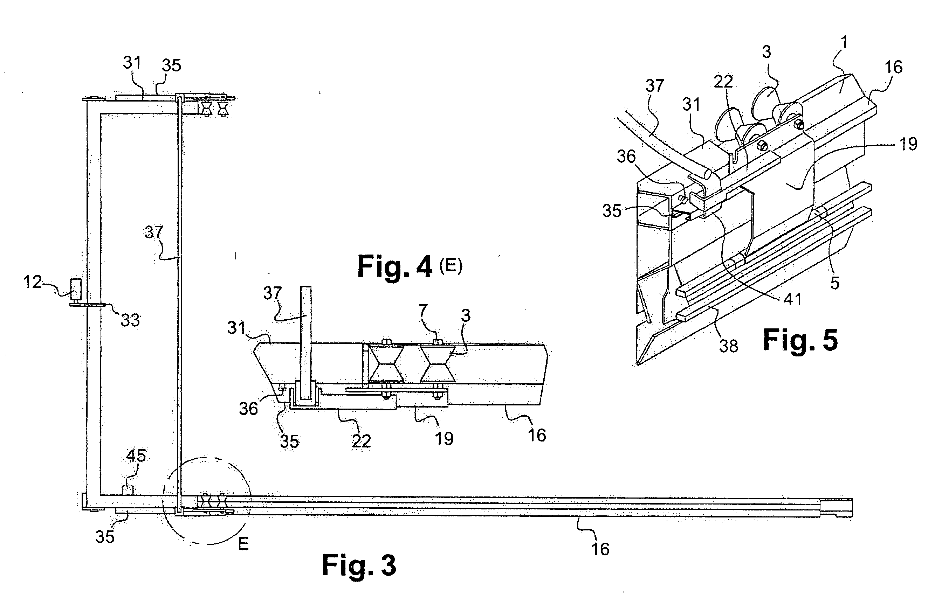

Le chariot 19 et l'arceau de prise de bâche 37 peuvent venir en prise entre eux grâce à des moyens de crochetage complémentaires comportant un doigt 22 du chariot 19 et un doigt d'indexage 41 de l'arceau de prise de bâche 37. Différentes variantes géométrique du système de crochetage du chariot 19 et du système de crochetage 41 de l'arceau de prise de bâche 37 peuvent être mises en oeuvre. Un système d'accroche par crabotage peut également être installé. Cette mise en prise peut avoir lieu lorsque le chariot est ramené vers l'extrémité de réception et que le bras est ensuite abaissé comme on peut mieux le voir sur la Figure 4. On comprend que si le bras 31 est remonté, d'une part, les moyens de crochetage 22, 41 ne seront plus en prise et, d'autre part, la bâche qui est fixée à l'arceau de prise de bâche 37 et les arceaux secondaires 56 est repoussée vers le haut et l'extérieur de la benne la libérant ainsi totalement vers le haut.

Sur la Figure 3, on remarque les deux chariots qui sont mis en oeuvre, des deux grands cotés de la benne. Sur la Figure 4, toujours vue de dessus, on voit plus précisément les relations entre le chariot 19 avec ses roulements 3 et l'arceau de prise de bâche 37 lorsqu'ils sont en pris entre eux. La Figure 5, en perspective, complète la Figure 4 et on peut voir que le chariot peut rouler sur le bord supérieur 1 de la paroi latérale de la benne grâce à ses moyens de roulement 3. On peut également voir les relations des différents éléments des moyens de retenue coulissants, notamment profil de guidage 35 et gorges de réception des tampons coulissants 44.

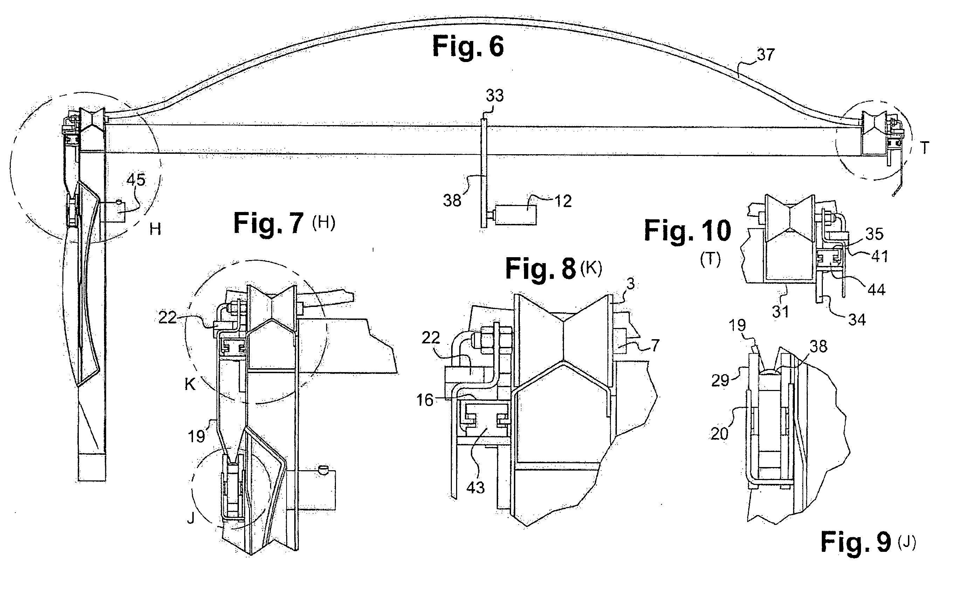

La Figure 6, vue à partir de l'intérieur de la benne, permet de visualiser les profils de guidage 35 des deux grands cotés de la benne et qui permettent un maintien avec coulissement de l'arceau de prise de bâche 37 et des arceaux secondaires 56. Les Figures 7, 8, 9 des cartouches détaillent la structure du système.

Les moyens de motorisation sont contrôlés par des systèmes de sécurité notamment à type de détection de butée et surcharge. L'opérateur dispose de commandes agissant sur les moyens de motorisation pour obtenir le bâchage et le débâchage de la benne. De préférence, un bouton d'arrêt d'urgence est prévu.

Lorsque la benne est bâchée, le chariot ayant entraîné - tiré - l'arceau de prise de bâche 37 et les arceaux secondaires 56 vers la petite extrémité de la benne opposée à l'extrémité de réception, les bras de la partie basculante sont abaissés. Si l'opérateur souhaite débâcher, il commande le système pour que le chariot entraine l'arceau de prise de bâche 37, lequel entraine les arceaux secondaires 56, vers l'extrémité de réception alors que les bras 31 sont toujours abaissés. Une fois le chariot et l'arceau de prise de bâche 37 et les arceaux secondaires 56 arrivés en butée coté extrémité de réception, le moyen de motorisation du chariot est arrêté et celui de la partie basculante est activé afin de relever les bras. La bâche est alors envoyée en dehors de l'ouverture supérieure de la benne la libérant complètement. Pour le bâchage, l'opération inverse est effectuée avec d'abord activation du moyen de motorisation de la partie basculante puis sont arrêt lorsque les bras sont abaissés puis activation du moyen de motorisation du chariot qui est alors en prise avec l'arceau de prise de bâche 37.

Bien entendu la présente invention n'est pas limitée aux modes de réalisation particuliers qui viennent d'être décrits, mais s'étend à toutes variantes et équivalents conformes à son esprit. Ainsi, on comprend bien que l'invention peut être déclinée selon de nombreuses autres possibilités sans pour autant sortir du cadre défini par la description et les revendications. En particulier, l'exemple présenté concerne une bâche qui vient recouvrir la partie supérieure de la benne mais il est également possible de mettre en ouvre l'invention pour recouvrir en outre des parois latérales de la benne qui seraient de type à claire-voie, notamment lorsque la benne correspond à une remorque ou un semi-remorque à ridelles permettant un chargement latéral. Ainsi, en alternative, le système est également configurable pour pouvoir bâcher et débâcher une/les parois latérales de la benne au cas où celles-ci seraient ouvertes/libres ou à claire-voie. Dans ce cas, la partie basculante est disposée verticalement au lieu d'horizontalement comme c'est le cas pour le bâchage/débâchage du dessus de la benne. De même l'arceau de prise de bâche est également disposé verticalement étendu entre un moyen de guidage bas sensiblement au niveau du plancher de la benne le long de la paroi latérale et un moyen de guidage/rail haut le long de la paroi latéral et sur lequel le chariot peut coulisser/rouler comme précédemment en entraînant l'arceau ici vertical. On comprend que dans cette configuration à chariot haut, un rail ou moyen de guidage soit nécessaire en haut de la paroi latérale ouverte ou à claire-voie. En variante, le chariot peut être disposé en bas sensiblement au niveau du plancher de la benne et cette fois le rail ou moyen de guidage haut 'est pas forcement indispensable, l'arceau de prise de bâche pouvant être en L ou en U pour rejoindre le bord supérieur de l'autre paroi latérale (arceau de forme en L) ou même l'autre coté du plancher (arceau de forme en U inversée). Il est ainsi possible selon les formes de réalisation de bâcher/débâcher le dessus et/ou une/les parois latérales de la benne. Dans tous les cas, les moyens de crochetage permettant la mise en prise ou le dégagement du chariot sur/de l'arceau de prise de bâche sont mis en oeuvre.

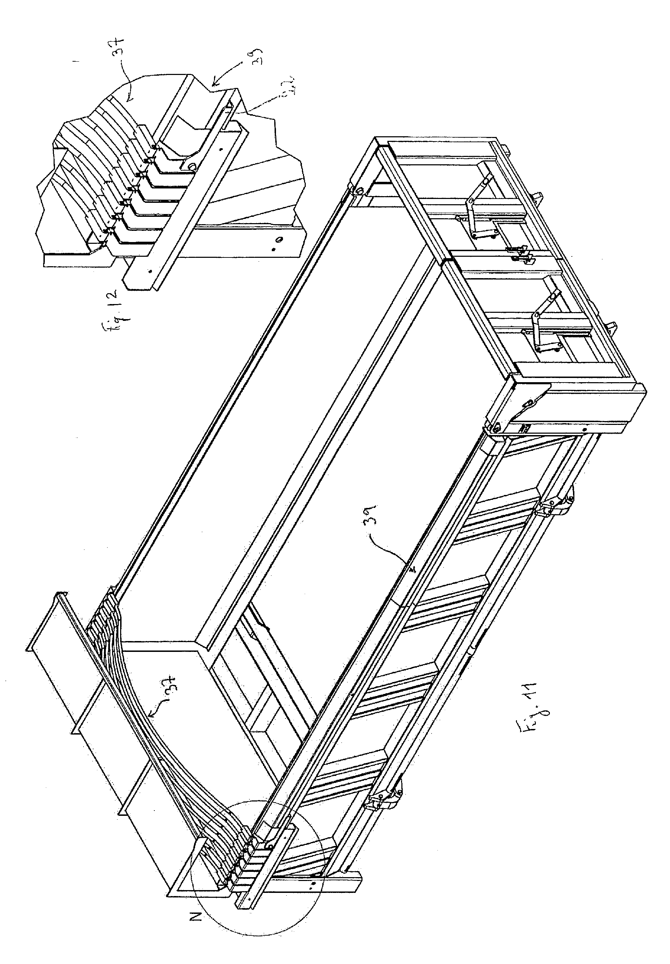

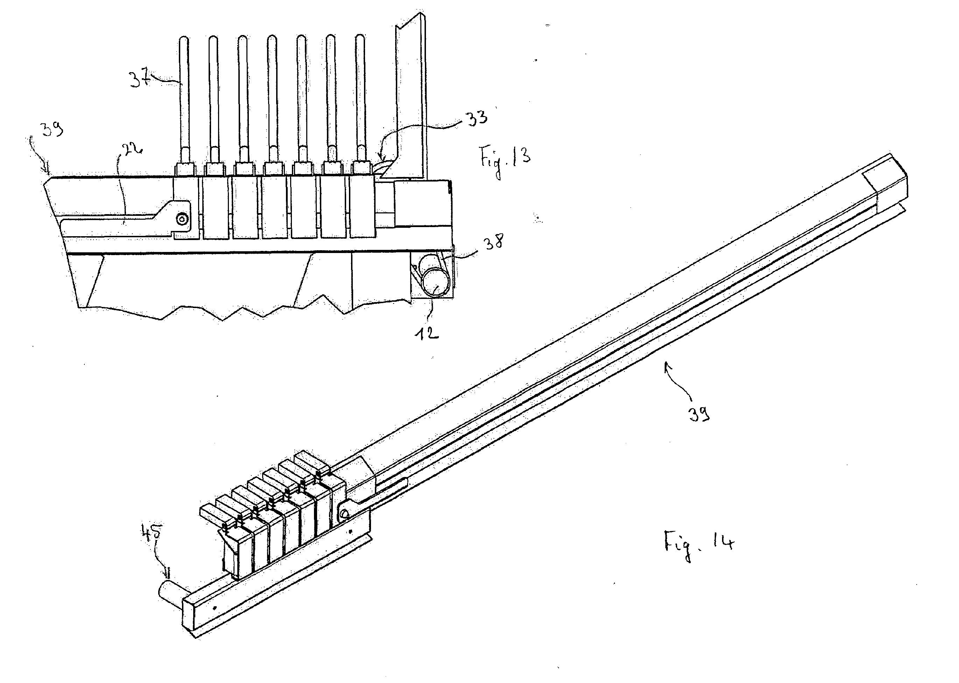

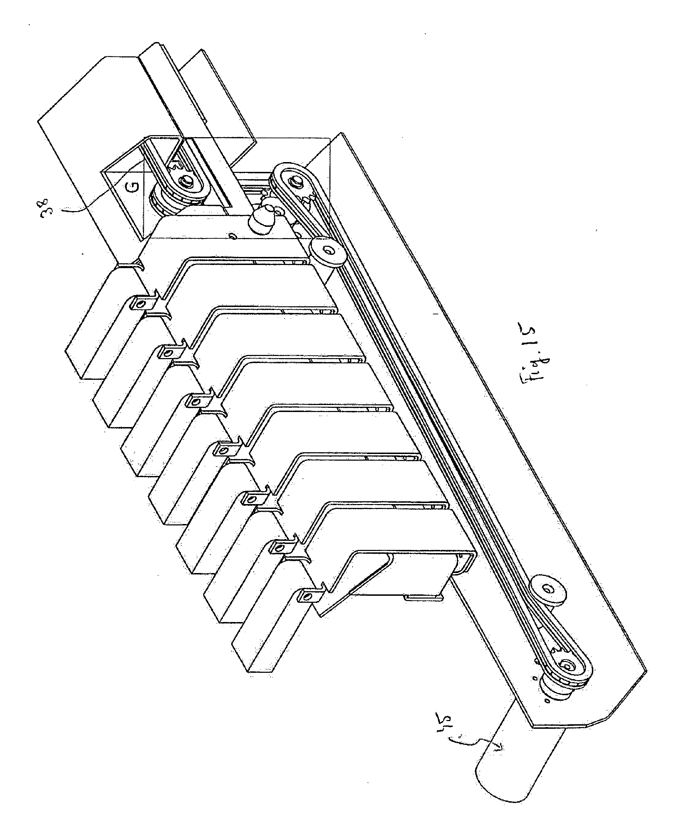

A titre d'exemple des variantes possibles on a représenté sur les Figures 11 à 15 la mise en oeuvre d'un équipement prêt à installer ou « kit » sur une benne. Cet équipement se présente sous forme d'un système de rail 39 et bras motorisés que l'on installe sur la première extrémité dite extrémité de réception et le coté latéral de la benne, le long de son bord haut et qui comporte des arceaux de prise de bâche 37 pouvant coulisser le long du système de rail motorisé d'un coté latéral et le long du bord haut opposé de la benne de l'autre coté latéral. Le système de rail permet également de « carteriser » le mécanisme d'entrainement de la bâche. Dans cet exemple, les déplacements s'effectuent par simple coulissement, sans galet. Sur les Figures 11 à 15, le dispositif est représenté dans une position de bâche repliée, les arceaux 37 ayant été ramenés sur les bras basculants mais ces derniers n'ayant pas encore basculés vers le haut. Sur la Figure 1, une benne équipée avec le kit est vue en perspective. On peut noter la présence d'un dais d'extrémité de benne revenant au dessus des arceaux ramenés sur les bras. Le dais peut être omis et dans le cas où il est présent, il bascule avec les bras. La Figure 12, vue en perspective, correspond à un agrandissement de l'extrémité du dispositif sur laquelle les arceaux 37 sont ramenés. La Figure 13 correspondant à une vue latérale de l'extrémité du dispositif sur laquelle les arceaux 37 sont ramenés permet de voir la motorisation 12 et l'entrainement 38, 33 des bras basculant. La Figure 14 montre le système de rail du kit et le moyen de motorisation 45 pour l'entraînement de la bâche. La Figure 15, vue en semi transparence, permet de visualiser les différentes parties du mécanisme d'entraînement de la bâche avec un renvoi. Dans cet exemple, le moteur 45 pour l'entraînement de la bâche est placé au delà de la première extrémité de la benne.

## Revendications

1. Système mécanisé de bâchage pour benne (42) de véhicule, la benne comportant au moins deux parois latérales allongées fixes ou ouvrantes à type de ridelles et deux extrémités opposées, la bâche étant amenée à recouvrir ou découvrir la benne à partir d'une des extrémités de ladite benne, dite extrémité de réception, grâce à un moyen d'entraînement,
**caractérisé en ce qu'**en position découverte extrême, la bâche est positionnée au delà de l'extrémité de réception pour libérer complètement le dessus et/ou les cotés de ladite benne, le moyen d'entraînement de la bâche comportant un arceau de prise de bâche (37) et d'éventuels arceaux secondaires (56), une partie basculante (30) et deux chariots (19) situés en opposition de chaque côté latéral,
- l'arceau de prise de bâche (37) et les arceaux secondaires s'étendant entre les deux parois latérales et la bâche y étant fixée, l'arceau de prise de bâche pouvant coulisser le long des parois latérales,
- les arceaux coulissant le long des parois latérales entrainés par l'arceau de prise de bâche,
- la partie basculante étant disposée à ladite extrémité de réception et comportant deux bras (31) articulés pouvant se déplacer chacun dans le plan de la paroi latérale correspondante entre une position remontée et une position abaissée sensiblement dans l'axe du bord supérieur de la paroi latérale correspondante,
- les chariots comportant des moyens de déplacement le long des deux parois latérales, les chariots étant entraînés par un premier moyen de motorisation (55),
et l'arceau de prise de bâche comporte au niveau de chacun des chariots un premier moyen de crochetage complémentaire d'un second moyen de crochetage du chariot, le premier et le second moyens de crochetage pouvant venir en prise l'un avec l'autre lorsque les bras sur lesquels est disposé l'arceau sont en position abaissée, le chariot ayant été ramené vers l'extrémité de réception, afin de rendre solidaire le chariot et l'arceau de prise de bâche et de permettre des déplacements de l'arceau de prise de bâche et des arceaux secondaires lors de l'entraînement des chariots, et pouvant se désolidariser lorsque les chariots sont ramenés vers l'extrémité de réception et que les deux bras sont remontés ou que l'un ou l'autre des côtés latéraux est ouvert.

2. Système selon la revendication 1, **caractérisé en ce que** les bras de la partie basculante ont une position remontée au delà de la verticale.

3. Système selon la revendication 1 ou 2, **caractérisé en ce que** l'arceau de prise de bâche et les arceaux secondaires comportent à leurs deux extrémités des moyens de retenue avec coulissement permettant le maintien coulissant desdits arceaux sur les deux parois latérales.

4. Système selon la revendication 3, **caractérisé en ce que** les moyens de retenue avec coulissement sont constitués d'éléments complémentaires à type de profil de guidage (35) à gorge de réception des galets ou tampons coulissants (44) disposés complémentairement sur l'arceau de prise de bâche et les bras et les parois latérales.

5. Système selon l'une quelconque des revendications précédentes, **caractérisé en ce que** la partie basculante (30) est entraînée par un second moyen de motorisation (12).

6. Système selon l'une quelconque des revendications précédentes, **caractérisé en ce que** le chariot est entraîné par le premier moyen de motorisation par l'intermédiaire d'une transmission à vis sans fin ou crémaillère ou courroie ou chaîne (38) ou câble.

7. Système selon l'une quelconque des revendications précédentes, **caractérisé en ce que** les moyens de roulement (3) du chariot sont des galets roulant ou tampons coulissants sur les bords supérieurs des parois latérales correspondantes.

8. Système selon l'une quelconque des revendications précédentes, **caractérisé en ce qu'**il comporte des détecteurs de fin de course pour la/les moyens de motorisation, un desdits moyens de détection de fin de course permettant l'arrêt des chariots vers l'extrémité de réception lors du débâchage lorsque l'arceau de prise de bâche est arrivé sur les bras correspondants et sans que les chariots n'interfèrent avec lesdits bras.

9. Système selon l'une quelconque des revendications précédentes, **caractérisé en ce qu'**il permet l'ouverture par des moyens hydrauliques de l'une ou l'autre des parois latérales ouvrantes de la benne, sans intervention manuelle sur la bâche, lorsque l'arceau de prise de bâche est arrivé sur les bras correspondants ou que la bâche est arrivée en extrémité de réception, et que les chariots ne plus solidaires de l'arceau de prise de bâche.

10. Benne comportant un ou deux systèmes mécanisés de bâchage selon l'une quelconque des revendications précédentes, et dans le cas de deux systèmes un système étant disposé à chaque extrémité de petit coté.

## Patentansprüche

1. Mechanisiertes Abdecksystem für einen Kipper (42) eines Fahrzeugs, wobei der Kipper wenigstens zwei langgestreckte, feste oder zu öffnende Seitenwände vom Typ Klappen sowie zwei gegenüberliegende Enden umfasst, wobei die Plane dazu gebracht wird, den Kipper mit Hilfe eines Antriebsmittels von einem der Enden des Kippers, dem sogenannten Aufnahmeende aus zu bedecken oder aufzudecken,
**dadurch gekennzeichnet, dass** die Plane in äußerster aufgedeckter Position jenseits des Aufnahmeendes angeordnet ist, um die Oberseite und/oder die Seiten des Kippers vollständig freizugeben, wobei das Mittel zum Antreiben der Plane einen Planengreifbügel (37) und mögliche Sekundärbügel (56), ein Kippteil (30) und zwei auf jeder Seitenfläche gegenüber liegende Schlitten (19) umfasst,
- wobei der Planengreifbügel (37) und die Sekundärbügel zwischen den beiden Seitenwänden verlaufen und die Plane hieran befestigt ist, wobei der Planengreifbügel entlang der Seitenwände gleiten kann,
- wobei die Bügel durch den Planengreifbügel angetrieben entlang der Seitenwände gleiten,
- wobei das Kippteil an dem Aufnahmeende angeordnet ist und zwei angelenkte Arme (31) umfasst, die sich jeweils in der Ebene der entsprechenden Seitenwand zwischen einer aufgestellten Position und einer abgesenkten Position im Wesentlichen in der Achse des oberen Randes der entsprechenden Seitenwand bewegen können,
- wobei die Schlitten Mittel zum Verschieben entlang der beiden Seitenwände umfassen, wobei die Schlitten durch ein erstes Motorisierungsmittel (55) angetrieben werden,
und der Planengreifbügel im Bereich eines jeden der Schlitten ein erstes Einhakmittel, das zu einem zweiten Einhakmittel des Schlittens ergänzend ist, umfasst, wobei das erste und das zweite Einhakmittel miteinander in Eingriff gelangen können, wenn die Arme, an denen der Bügel angeordnet ist, sich in abgesenkter Position befinden, wobei der Schlitten zu dem Aufnahmeende hin zurückgeführt worden ist, um den Schlitten und den Planengreifbügel fest miteinander zu verbinden und um Bewegungen des Planengreifbügels und der Sekundärbügel bei Antrieb der Schlitten zu ermöglichen, und sich voneinander trennen können, wenn die Schlitten zu dem Aufnahmeende zurückgeführt und die beiden Arme aufgestellt werden oder die eine oder andere der Seitenflächen geöffnet ist.

2. System nach Anspruch 1, **dadurch gekennzeichnet, dass** die Arme des Kippteils eine jenseits der Vertikalen hochgestellte Position haben.

3. System nach Anspruch 1 oder 2, **dadurch gekennzeichnet, dass** der Planengreifbügel und die Sekundärbügel an ihren beiden Enden Verschiebe-Haltemittel umfassen, die das verschiebliche Halten der Bügel an den beiden Seitenwänden ermöglichen.

4. System nach Anspruch 3, **dadurch gekennzeichnet, dass** die Verschiebe-Haltemittel von ergänzenden Elementen vom Typ Führungsprofil (35) mit Rille zur Aufnahme der Rollen oder Schiebepropfen (44) gebildet sind, die ergänzend an dem Planengreifbügel und den Armen und den Seitenwänden angeordnet sind.

5. System nach einem der vorhergehenden Ansprüche, **dadurch gekennzeichnet, dass** das Kippteil (30) durch ein zweites Motorisierungsmittel (12) angetrieben wird.

6. System nach einem der vorhergehenden Ansprüche, **dadurch gekennzeichnet, dass** der Schlitten durch das erste Motorisierungsmittel mittels eines Schnecken- oder Zahnstangen- oder Riemen- oder Ketten- (38) oder Seilantriebs angetrieben wird.

7. System nach einem der vorhergehenden Ansprüche, **dadurch gekennzeichnet, dass** die Laufmittel (3) des Schlittens laufende Rollen oder Schiebepfropfen an den oberen Rändern der entsprechenden Seitenwände sind.

8. System nach einem der vorhergehenden Ansprüche, **dadurch gekennzeichnet, dass** es Endstellungsdetektoren für das/die Motorisierungsmittel umfasst, wobei eines der Mittel zum Erfassen der Endstellung das Anhalten der Schlitten in Richtung des Aufnahmeendes während des Abdeckens ermöglicht, wenn der Planengreifbügel an den entsprechenden Armen angelangt ist und ohne dass die Schlitten mit den Armen in Berührung kommen.

9. System nach einem der vorhergehenden Ansprüche, **dadurch gekennzeichnet, dass** es das Öffnen der einen oder der anderen der zu öffnenden Seitenwände des Kippers durch Hydraulikmittel, ohne das manuelle Eingreifen an der Plane ermöglicht, wenn der Planengreifbügel an den entsprechenden Armen angelangt ist oder die Plane an dem Aufnahmeende angekommen ist und die Schlitten nicht mehr mit dem Planengreifbügel fest verbunden sind.

10. Kipper, umfassend ein oder zwei mechanisierte Abdecksysteme nach einem der vorhergehenden Ansprüche, und wobei im Fall von zwei Systemen ein System an jedem Schmalseitenende angeordnet ist.

## Claims

1. A mechanized tarp system for a vehicle dump (42), the dump comprising at least two fixed or opening elongated lateral walls of the side-panel type, and two opposite ends, the tarp being caused to cover or uncover the dump from one of the ends of said dump, called the receiving end, thanks to a driving means,
**characterized in that**, in the extreme uncovered position, the tarp is positioned beyond the receiving end so as to fully free the top and/or the sides of said dump, the tarp driving means including a tarp taking bow (37) and possible secondary bows (56), a tipping part (30) and two carriages (19) located opposite to each other on each lateral side,
- the tarp taking bow (37) and the secondary bows extending between the two lateral walls and the tarp being fixed thereto, the tarp taking bow being able to slide along the lateral walls,
- the bows sliding along the lateral walls driven by the tarp taking bow,
- the tipping part being arranged at said receiving end and including two articulated arms (31), each movable in the plane of the corresponding lateral wall between a raised position and a lowered position, substantially in the axis of the upper edge of the corresponding lateral wall,
- the carriages including means for moving along the two lateral walls, the carriages being driven by a first motor means (55),
and the tarp taking bow includes at the level of each carriage a first hook means complementary of a second hook means of the carriage, the first and the second hook means being able to engage with each other when the arms on which is arranged the bow are in the lowered position, the carriage having been brought back to the receiving end, so as to fasten the carriage and the tarp taking bow to each other and to allow displacements of the tarp taking bow and the secondary bows when the carriages are driven, and able to disengage from each other when the carriages are brought back to the receiving end and the two arms are raised or either one of the lateral sides is open.

2. The system according to claim 1, **characterized in that** the arms of the tipping part have a position raised beyond de vertical.

3. The system according to claim 1 or 2, **characterized in that** the tarp taking bow and the secondary bows include at their two ends sliding holding means for slidingly maintaining said bows on the two lateral walls.

4. The system according to claim 3, **characterized in that** the sliding holding means are consisted of complementary elements with a type of guiding profile (35) having a groove for receiving rollers or sliding pads (44) arranged complementary on the tarp taking bow and the arms and the lateral walls.

5. The system according to any one of the preceding claims, **characterized in that** the tipping part (30) is driven by a second motor means (12).

6. The system according to any one of the preceding claims, **characterized in that** the carriage is driven by the first motor means through an endless screw or rack or belt or chain (38) or cable transmission.

7. The system according to any one of the preceding claims, **characterized in that** the rolling means (3) of the carriage are rollers rolling or pads sliding on the upper edges of the corresponding lateral walls.

8. The system according to any one of the preceding claims, **characterized in that** it includes end-of-travel detectors for the motor(s) means, one of said end-of-travel detection means allowing the carriages to be stopped toward the receiving end upon tarp removal, when the tarp taking bow is arrived on the corresponding arms and without the carriages interfere with said arms.

9. The system according to any one of the preceding claims, **characterized in that** it allows the opening by hydraulic means of either one of the opening lateral walls of the dump, without manual intervention on the tarp, when the tarp taking bow is arrived on the corresponding arms or the tarp is arrived at the receiving end, and the carriages are no longer fastened to the tarp taking bow.

10. A dump including one or two mechanized tarp systems according to any one of the preceding claims, and in the case of two systems, one system being arranged at each end of small side.
